(19) Europäisches Patentamt European Patent Office Office européen des brevets

(11) **EP 1 501 300 B1**

(12) **EUROPEAN PATENT SPECIFICATION**

(45) Date of publication and mention
of the grant of the patent:
**04.05.2011 Bulletin 2011/18**

(51) Int Cl.:
*H04N 7/08* *(2006.01)*          *H04N 7/10* *(2006.01)*

(21) Application number: **03291831.0**

(22) Date of filing: **24.07.2003**

(54) **Multiplexed image distribution system**

System zur Verbreitung multiplexierter Bilder

Système de distribution des images multiplexées

(84) Designated Contracting States:
**AT BE BG CH CY CZ DE DK EE ES FI FR GB GR
HU IE IT LI LU MC NL PT RO SE SI SK TR**

(43) Date of publication of application:
**26.01.2005 Bulletin 2005/04**

(73) Proprietor: **Planar Systems Oy
02200 Espoo (FI)**

(72) Inventors:
• **Lagarrigue, Patrick
81000 Albi (FR)**
• **Souviron, Marc
31000 Toulouse (FR)**

• **Lambolez, Pierre-Yves
81000 Albi (FR)**

(74) Representative: **Hirsch & Associés
58, avenue Marceau
75008 Paris (FR)**

(56) References cited:
**US-A- 5 691 777**

• **PATENT ABSTRACTS OF JAPAN vol. 2000, no.
14, 5 March 2001 (2001-03-05) & JP 2000 324489
A (SONY CORP), 24 November 2000 (2000-11-24)**

## Description

The invention relates to the field of displays and video walls. A video wall is formed of adjacent several displays, which define a continuous display surface. Strictly speaking, the display surface of a video wall is not continuous - since it is formed of the display surfaces of the different displays that form the video wall. However, the display surface appears continuous or almost continuous to the user; at least, it may be used as a continuous surface for the display of flows of images or videos over the whole surface of the video wall. The displays in a video wall may notably comprise projectors or LED panels. Video walls are for instance sold by the applicant under the trademark WallStation or by Electrosonic under the trademark Vector.

Prior art solutions in the field of video walls are discussed in EP patent application 02290587 filed on March 8, 2002. For instance, Lanetco (Archamps, France) sells under the trademark SuperCube a rear projection system or projector, which may be assembled to provide a video wall. In order to display P sources on the eight projection systems of the video wall, one uses a commutation switch with P inputs and 16 outputs; each output would be connected to one live input of a projection system. Such a solution still requires 16 cables and 16 acquisition stages.

In addition, EP patent application 02290587 suggests multiplexing sources applying multiplexed sources to a video wall formed of several displays. The video wall contains one or more demultiplexer for receiving images from the multiplexed sources and for outputting images from demultiplexed sources. All displays in the wall are provided with images from demultiplexed sources. This makes it possible to show on any of the displays any of the demultiplexed images, without having to provide a commutation switch.

These solutions are adapted to the delivery of images to a video wall.

In a distinct field of the art, US-B-6 229 849 discusses coding methods for digital broadcasting by satellite broadcast a plurality of programs processed by data compression coding using MPEG technique. Programs are frequency-multiplexed and transmitted with a fixed transmission rate, or with the transmission rate dynamically changed by a statistical multiplexing technique.

JP-A-2000 324 489 discusses a multi-screen image sending out system. The image to be displayed is divided into two or more fields, according to the number of screens of the multi-screen. The fields are multiplexed, transmitted and received. They are demultiplexed, and each field is sent to the relevant screen for display.

US-A-5 691 777 discusses a teleconference system, with a number of monitors in various separate locations. A particular remote site selects the video signals he wishes to receive - that is selects some of the other participating sites. The video signals which were selected are multiplexed and selectively transmitted to the particular remote site.

Accordingly, there is a need for a solution permitting delivery of images to several display systems, which would not involve complex cabling or broadcasting.

The invention therefore provides, in one embodiment, an image distribution system, comprising

- a multiplexer having at least two inputs adapted for receiving images from at least two sources, the multiplexer being adapted for multiplexing images received on said inputs and outputting on a connection multiplexed images;
- a least two separate display devices, each of said separate display device being connected to the connection and having a demultiplexer adapted for receiving multiplexed images and outputting demultiplexed images.

The system may also present one or more of the following features:

- the multiplexer is adapted for time-multiplexing images received on the inputs;
- the number of images per second for one source in the images from multiplexed sources is lower than the number of images per second for said source provided on said multiplexer input;
- the demultiplexer in a display device is adapted to output demultiplexed images from any one of the multiplexed images
- the display devices comprise a video wall having at least two displays forming a continuous or quasi-continuous display surface.

If the display devices comprise a video wall, it may comprise one demultiplexer, adapted to provide the images from demultiplexed sources to each of the displays forming the video wall. Alternatively, each display in the video wall could comprise a demultiplexer and a processor, a demultiplexer being adapted to the images from demultiplexed sources to the processor.

In another embodiment, the invention provides a process for distributing images to at least two separate display devices, the process comprising:

- multiplexing images received from at least two sources;
- providing over a connection multiplexed images to each of said separate display devices;
- at each of said separate display devices, demultiplexing the received images and displaying images of at least one of said sources.

The multiplexing step preferably comprises time-multiplexing the received images. One may also reduce the number of images per second for at least one of the sources.

In the step of providing, all multiplexed images may be provided to each of the separate display devices. One may use a single connection, all display devices being serially connected on said connection.

The use of multiplexed sources makes it possible to reduce the number of cables for delivering images to several displays.

An image distribution system embodying the invention will now be described, by way of non-limiting example, and in reference to the accompanying drawings, where the figure shows a schematic view of the image distribution system.

The invention suggests multiplexing flows of images provided by sources, so as to be able to use a single cable for feeding the images of the multiplexed sources to the various display devices. These display devices are serially connected to the single cable. In case the necessary throughput for transmitting images to the display devices is higher than the throughput possible on the cable, the refresh rate of images of one source or more may be decreased, while keeping the same resolution.

In each of the display devices, images from multiplexed sources are received and demultiplexed before being displayed. Each of the display devices may select the demultiplexed sources it needs to display.

The invention makes it possible to use a single cable for various display devices, without having to provide a commutation switch. Further, it makes it possible to display the same images on several separate display devices, without duplicating cabling. Last, transmission on the cable may be digital, which avoids multiple analogue to digital and digital to analogue conversions.

In the rest of this description, the invention is described in reference to an exemplary image distribution system, using three display devices and eight sources. The figure first shows a multiplexer 2, the input terminals of which are connected to sources $4_1$ to $4_8$.

The sources may be graphic or video sources, with or without sound, sources in the RGB format or more generally any image source in a format known *per se,* adapted to be displayed in a display device. Available standards for video sources notably comprise PAL, SECAM, NTSC and Japan. For each of these standards, various substandards may exist, such as M, N or 4.43 for NTSC. Standards for graphic sources comprise interlaced or non-interlaced VGA, SVGA, XGA, SXGA, UXGA or other standards used for different image resolutions. The various standards or formats of images - video or graphics - that may be used for the image sources only depend on displaying capabilities of the displays devices used in the image distribution system. The examples given above should not be construed as limiting the types of images or sources usable according to the invention.

Sources could comprise one or several of CCTVs, DVD players, personal computers or LAN workstations. These sources may output images in various formats, which are multiplexed by multiplexer 2. Various methods may be used for multiplexing images of the various sources. The images are preferably time multiplexed, since this makes it possible to use the same type of cables as in the prior art. Time multiplexing notably makes is possible to use prior art encoding solution at the physical layer of the cable 6 discussed below.

The bandwidth allowed for each source in the multiplexer may be fixed; it may also vary dynamically, according to the types of sources or number of sources inputted to the video wall. This is further discussed below.

The output of the multiplexer 2 is connected to a cable 6. This cable may for instance be a fibre optic cable or a metallic cable. One may use for cable 6 a Digital Visual Interface using the transition minimised differential signalling (TMDS) protocol as serial encoding protocol. Using a DVI format on a single cable provides a maximum rate of 165 Mpixels/second, while a DVI format on a double cable provides a maximum rate of 330 Mpixels/second. One may more generally use other type of transmission protocol on the cable. There may be provided more than one physical cable, e.g. cable 6 could be formed of several parallel physical channels or cables. The generic word "connection" encompasses a single physical cable, or several cable used concomitantly.

The image distribution system further comprises several display devices- three in the example of the figure. Each of the display devices 8, 10 and 12 is connected to cable 6. In the example of the figure, display device 8 is a video wall, while display devices 10 and 12 are monitors. All display devices are connected to the cable, so that the cable serially connects the devices.

Each display devices comprises at least one demultiplexer for demultiplexing images in the multiplexed flow of images provided on the cable. The operation of these demultiplexers is adapted to the operation of multiplexer 2 used for multiplexing images to the cable.

In the example of the figure, display devices 10 and 12 comprise monitors. Each of the display devices further comprises a demultiplexer 14, 16 and a microprocessor or any other computing means 18, 20. The demultiplexer receives multiplexed images from cable 6 and demultiplexes the flow of images received on the cable. The microprocessor selects among demultiplexed images the image or the images to be displayed on the monitor; the microprocessor may also control the demultiplexer, so that the demultiplexer only provides the microprocessor with the required source or sources. The fact that the images are multiplexed makes it possible to select any of the multiplexed images for display on the monitor. More than one image may be displayed if necessary. In addition, it is possible to change the displayed image - that is, select another source or other sources - simply by adequately programming the microprocessor. The microprocessor then controls the demultiplexer so that the demultiplexer provides the required source or sources to the microprocessor. There is no need to change cabling between multiplexer 2 and display devices 10 and 12, even when the source(s) of images to be displayed on a display device need to be changed.

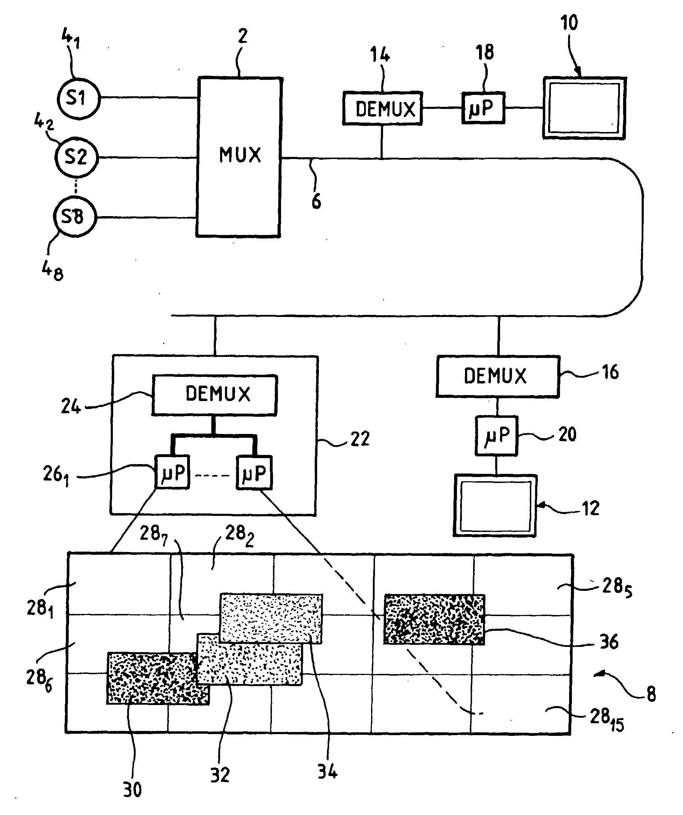

Display device 8 is a video wall of the type represented in figure 1 of EP application 02290587, formed of 15 contiguous displays $28_1$ to $28_{15}$. The video wall comprises a wall circuit 22. The circuit comprises a demultiplexer 24, which demultiplexes the images of the various sources and provides images of the demultiplexed sources to eight outputs. Demultiplexed images are then provided to image processors $26_1$ to $26_{15}$. As shown by the bold connection in the figure between demultiplexer 24 and processors $26_1$ to $26_{15}$, the demultiplexed sources are provided to the processors. The bold connection in the figure is actually representative of the number of processors.

Image processors select among the various demultiplexed sources the image(s) or part of image(s) to be displayed; specifically, the processor may display one image, or select on a received source an area to be displayed. In the example represented on the figure, processor $26_2$ would select the upper left part of the images 34 of one source for display on the display $28_2$. Processor $26_7$ would select part of images 30, part of images 32 and part of images 34 for display on display $28_7$. Images 36 is an additional image displayed on four displays. A processor may also select various images in different formats, for a picture-in-picture display; the number of images to be displayed on each display is not limited by the number of inputs to the electronic system.

One could also use in video wall 8 the solution of figure 2 of EP application 02290587. In this case, the video wall would comprise an image processor in each display of the wall, instead of having the various processors grouped in a single wall circuit 22. In this case, each image processor would further be provided with a demultiplexer or with a demultiplexing stage. The input cable would then be connected in parallel to the demultiplexer of each image processor. The demultiplexer of the processor of each display is thus provided with the multiplexed sources. As in the example of the figure, each demultiplexer may thus demultiplex one or several of the sources, for subsequent display by the processor on the display surface of the corresponding display.

The bandwidth allowed for each source in the multiplexer may be fixed; it may also vary dynamically, according to the types of sources or number of sources inputted to the video wall.

If the bandwidth granted to transmitting a given source is smaller that the throughput necessary for this source, the refresh rate for the images of the source may simply be decreased. This makes it possible to display complete images on the video wall - even if the refresh rate is smaller. The resolution is preferably maintained. For instance, assume each video source has a resolution of 1280 * 1024 pixels, with three colours R, G and B, each colour being coded on 256 levels or 8 bits. If the refresh rate is 60 images per second, the bandwidth necessary for transmitting one such video source is

$$1280 * 1024 * 60 = 78\ 643\ 200\ \text{pixel/s}$$

that is 1.89Gbit/s.

If the allowable throughput on the cable is 2 Gbit/s, one may allocate 0.25 Gbit/s to each source - in the simplest embodiment where the same throughput is allocated to each source. In this case, the refresh rate for each source would become

$$60 * 0.25 / 1.89 = 7.9\ \text{images per second.}$$

Reducing the refresh rate of the images makes it possible to display images having the optimal resolution. In this case, the number of images per second for one given source in the flow of images of the multiplexed sources is lower than the number of images per second in the source as originally input to the multiplexer. The easiest solution in such a case is to serially transmit one image from each source on the connection 18; in other words, the sources are scanned successively and one image is transmitted each time a source is scanned.

In the example given above, the same refresh rate is applied to all sources; this is not necessary. One may for instance select different refresh rates according to the types of sources; in this case, graphics sources may require a lower refresh rate than video sources. One may also lower the refresh rate for a source, which is not currently being displayed on the video wall. Refresh rates may be varied dynamically, e.g. according to the type of display devices connected to the cable.

If the bandwidth on connection 6 is sufficient, there may not be any need to limit the bandwidth of the sources. For instance, assume connection 18 is formed of two cables each having a bandwidth of 1 Gbit/s. Assume video images have a resolution of 500 * 500 pixels, with 30 images per second and a coding of each pixel of 24 bits. In this example, the throughput for each video image is 0.18 Gbit/s. If only four sources are multiplexed, connection 6 clearly has enough bandwidth for transmitting the images of the multiplexed sources, with the full resolution and the refresh rate of 30 images/s.

The process for displaying images of the various sources to the various display devices thus involves multiplexing the images of the various sources, transmitting images of the multiplexed sources to the various display devices, demultiplexing the images of the various sources at the video wall and displaying image(s) of the demultiplexed sources at each of the display devices.

The invention is not limited to the embodiments disclosed above. One may use as a display device other types of devices than a video wall or monitor. In case of video walls, the video wall may comprise more or less than 15 displays. The example of the figure shows eight image sources; one may use more or less than 8 sources. There may also be more than one image processor per display. Although this is not represented in the drawings, one may use a several demultiplexers for a single display, for allowing picture-in-picture on the display.

In the description of the preferred multiplexing scheme, the resolution of the images is maintained; this solution is preferred for usual applications of display devices, such as control rooms. One may also decide to decrease resolution of the images of some sources, while keeping the same refresh rate. Both solutions may be combined - some sources having a lower refresh rate and some other a lower resolution. Again, the type of multiplexing may be adapted dynamically.

Last, one may cascade the multiplexer in order to increase the number of sources, while using the same devices. There could also be separate multiplexers for inputting images on cable 6.

In the embodiment described above, the various display devices are connected in series to connection 6. They may relay the signal, to increase propagation length. The display devices may also simply read the signal; in this case, the fact that one of the display devices is operating or not is irrelevant to the operation of the other display devices.

In all figures and explanations, item not related to the invention - such as possible amplifiers - are not represented.

**Claims**

1. An image distribution system, comprising:

   a multiplexer (2) having at least two inputs adapted for receiving images from at least two sources ($4_1$, $4_8$), the multiplexer being adapted for multiplexing images received on said inputs and outputting on a single connection multiplexed images; and
   at least two separate display devices (8, 10, 12), each of said separate display devices being connected to the connection (6) and having a demultiplexer (14, 16, 24) adapted for receiving the multiplexed images and outputting demultiplexed images from two or more of said sources ($4_1$, $4_8$).

2. The system of claim 1, wherein the multiplexer is adapted for time-multiplexing images received on said inputs.

3. The system of claim 1 or 2, wherein the number of multiplexed images per second from one of the sources is lower than the number of images per second received from said source at said multiplexer input.

4. The system of claim 1, 2 or 3, wherein the demultiplexer is adapted to output demultiplexed images from any of the multiplexed images.

5. The system of one of claims 1 to 4, wherein at least one of said display devices comprises a video wall having at least two displays ($28_1$, $28_{15}$) forming a continuous or quasi-continuous display surface.

6. The system of claim 5, wherein the video wall comprises one demultiplexer adapted to provide demultiplexed images to each of said displays ($28_1$, $28_{15}$).

7. The system of claim 6, wherein the one demultiplexer of the video wall is adapted to provide demultiplexed images from two or more of said sources to each of said displays.

8. The system of one of claims 5 to 7, wherein the video wall comprises a first processor ($26_1$) that selects a first part of one of the demultiplexed images for display on a first one of the displays and a second processor ($26_2$) that selects a second part of said one demultiplexed image for display on a second one of the displays, such that said one demultiplexed image spans across at least two displays of the display surface.

9. The system of claim 5, wherein each display ($28_1$, $28_{15}$) in the video wall comprises a demultiplexer and a processor, and wherein each demultiplexer is adapted to provide to the processor the demultiplexed images from two or more of said sources.

10. A process for distributing images to at least two separate display devices (8, 10, 12), the process comprising:

    multiplexing images received from at least two sources ($4_1$, $4_8$);
    providing over a single connection multiplexed images to each of said separate display devices (8, 10, 12);
    at each of said separate display devices, demultiplexing the received multiplexed images; and
    at one of said separate display devices, displaying the demultiplexed images from two or more of said sources.

11. The process of claim 10, wherein the step of multiplexing comprises time-multiplexing the received images.

12. The process of claim 11, wherein the step of multiplexing further comprises reducing the number of images per second for at least one of said sources.

13. The process of claim 10, 11, or 12, wherein the step of providing multiplexed images comprises providing all multiplexed images to each of said separate display devices.

14. The process of one of claims 10 to 13, wherein all display devices are serially connected on said single connection.

15. The process of one of claims 10 to 14, wherein at least one of the separate display devices comprises a video wall having at least two displays ($28_1$, $28_{15}$) forming a continuous or quasi-continuous display surface, and further comprising:

> selecting a first part of one of the demultiplexed images for display on a first one of the displays, and
> selecting a second part of said one demultiplexed image for display on a second one of the displays, such that said one demultiplexed image spans across at least two displays of the display surface.

**Patentansprüche**

1. Bildverteilungssystem umfassend:

> einen Multiplexer (2), der mindestens zwei auf den Empfang von Bildern aus mindestens zwei Quellen ($4_1$, $4_8$) eingerichtete Eingänge aufweist, und der auf das Multiplexen der auf den Eingängen empfangenen Bilder und die Ausgabe der gemultiplexten Bilder auf einer einzelnen Verbindung eingerichtet ist; und
> mindestens zwei separate Anzeigegeräte (8, 10, 12), die beide an die Verbindung (6) angeschlossen sind und einen Demultiplexer (14, 16, 24) aufweisen, der auf den Empfang der gemultiplexten Bilder und die Ausgabe der demultiplexten Bilder aus zwei oder mehr der besagten Quellen ($4_1$, $4_8$) eingerichtet ist.

2. System nach Anspruch 1, wobei der Multiplexer auf das Zeitmultiplexen der an den Eingängen empfangenen Bilder eingerichtet ist.

3. System nach Anspruch 1 oder 2, wobei die Anzahl der pro Sekunde gemultiplexten Bilder von einer der Quellen geringer als die Anzahl der pro Sekunde von dieser Quelle an dem Multiplexer-Eingang empfangenen Bilder ist.

4. System nach Anspruch 1, 2 oder 3, wobei der Demultiplexer auf die Ausgabe von demultiplexten Bildern aus irgendwelchen der gemultiplexten Bilder eingerichtet ist.

5. System nach einem der Ansprüche 1 bis 4, wobei mindestens eins der Anzeigegeräte eine Videowand mit mindestens zwei Anzeigen ($28_1$, $28_{15}$) aufweist, die eine kontinuierliche oder quasi-kontinuierliche Anzeigefläche bilden.

6. System nach Anspruch 5, wobei die Videowand einen Demultiplexer umfasst, der eingerichtet ist, demultiplexte Bilder auf jeder der Anzeigen ($28_1$, $28_{15}$) bereitzustellen.

7. System nach Anspruch 6, wobei der eine Multiplexer der Videowand eingerichtet ist, demultiplexte Bilder aus zwei oder mehr der besagten Quellen auf jeder der Anzeigen bereitzustellen.

8. System nach einem der Ansprüche 5 bis 7, wobei die Videowand einen ersten Prozessor ($26_1$), der einen ersten Teil eines der demultiplexten Bilder zur Anzeige auf einer ersten der Anzeigen auswählt, und einen zweiten Prozessor ($26_2$) umfasst, der einen zweiten Teil eines der demultiplexten Bilder zur Anzeige auf einer zweiten der Anzeigen auswählt, derart, dass sich eins der demultiplexten Bilder über mindestens zwei Anzeigen der Anzeigefläche erstreckt.

9. System nach Anspruch 5, wobei jede Anzeige ($28_1$, $28_{15}$) in der Videowand einen Demultiplexer und einen Prozessor umfasst, und wobei jeder Demultiplexer eingerichtet ist, die demultiplexten Bilder aus zwei oder mehr der besagten Quellen am Prozessor bereitzustellen.

10. Verfahren zur Verteilung der Bilder auf mindestens zwei separate Anzeigegeräte (8, 10, 12), umfassend:

> Multiplexen von Bildern, die aus mindestens zwei Quellen ($4_1$, $4_8$) empfangen wurden;
> Bereitstellen der gemultiplexten Bilder auf einer einzelnen Verbindung an jedem der separaten Anzeigegeräte (8, 10, 12);
> Demultiplexen der empfangenen gemultiplexten Bilder an jedem der separaten Anzeigegeräte; und
> Anzeigen der demultiplexten Bilder aus zwei oder mehr der besagten Quellen an einem der separaten Anzeigegeräte.

11. Verfahren nach Anspruch 10, wobei der Schritt des Multiplexens das Zeitmultiplexen der empfangenen Bilder umfasst.

12. Verfahren nach Anspruch 11, wobei der Schritt des Multiplexens ferner das Reduzieren der Anzahl von Bildern pro Sekunde für mindestens eine der Quellen umfasst.

13. Verfahren nach Anspruch 10, 11 oder 12, wobei der Schritt des Bereitstellens der gemultiplexten Bilder das Bereitstellen aller gemultiplexten Bilder an jedem der separaten Anzeigegeräte umfasst.

14. Verfahren nach einem der Ansprüche 10 bis 13, wobei alle Anzeigegeräte seriell an die einzelne Verbindung angeschlossen sind.

15. Verfahren nach einem der Ansprüche 10 bis 14, wobei mindestens eins der separaten Anzeigegeräte eine Videowand mit mindestens zwei Anzeigen ($28_1$, $28_{15}$) umfasst, die eine kontinuierliche oder quasi-kontinuierliche Anzeigefläche bilden, und ferner umfassend:

   Auswählen eines ersten Teils eines der demultiplexten Bilder zur Anzeige auf einer ersten der Anzeigen, und
   Auswählen eines zweiten Teils eines der demultiplexten Bilder zur Anzeige auf einer zweiten der Anzeigen, derart, dass sich das eine demultiplexte Bild über mindestens zwei Anzeigen der Anzeigefläche erstreckt.

**Revendications**

1. Un système de distribution de l'images, comprenant:

   un multiplexeur (2) ayant au moins deux entrées adaptées pour recevoir des images provenant d'au moins deux sources ($4_1$, $4_8$), le multiplexeur étant adapté pour multiplexer des images reçues sur lesdites entrées et pour sortir sur une seule connexion les images multiplexées, et
   au moins deux dispositifs d'affichage séparés (8, 10, 12), chacun desdits dispositifs d'affichage séparés étant relié à la connexion (6) et ayant un démultiplexeur (14, 16, 24) adapté pour recevoir les images multiplexées et fournir en sortie des images démultiplexées à partir de deux ou plusieurs desdites sources ($4_1$, $4_8$).

2. Le système de la revendication 1, dans lequel le multiplexeur est adapté pour le multiplexage temporel des images reçus sur lesdites entrées.

3. Le système de la revendication 1 ou 2, dans lequel le nombre d'images multiplexées par seconde à partir de l'une des sources est inférieur au nombre d'images par seconde reçues à partir de ladite source à ladite entrée du multiplexeur.

4. Le système de la revendication 1, 2 ou 3, dans lequel le démultiplexeur est adapté pour fournir en sortie des images démultiplexées à partir de l'une quelconque des images multiplexées.

5. Le système de l'une des revendications 1 à 4, dans lequel au moins un des dispositifs d'affichage comprend un mur vidéo ayant au moins deux écrans ($28_1$, $28_{15}$) formant une surface d'affichage continue ou quasi-continue.

6. Le système de la revendication 5, dans lequel le mur vidéo comprend un démultiplexeur adapté pour fournir des images démultiplexées à chacun desdits écrans ($28_1$, $28_{15}$).

7. Le système de la revendication 6, dans lequel le démultiplexeur unique du mur d'images est conçu pour fournir des images démultiplexées à partir de deux ou plusieurs desdites sources à chacun desdits écrans.

8. Le système de l'une des revendications 5 à 7, dans lequel le mur vidéo comprend un premier processeur ($26_1$) qui sélectionne une première partie de l'une des images démultiplexées pour affichage sur un premier parmi les écrans et un second processeur ($26_2$) qui sélectionne une deuxième partie de ladite une image démultiplexée pour affichage sur un deuxième parmi les écrans, de telle sorte que ladite une image démultiplexée s'étend sur au moins deux écrans de la surface d'affichage.

9. Le système de la revendication 5, dans lequel chaque écran ($28_1$, $28_{15}$) dans le mur vidéo comprend un démultiplexeur et un processeur, et dans lequel chaque démultiplexeur est adapté pour fournir au processeur les images démultiplexées à partir de deux ou plusieurs desdites sources.

10. Un procédé de distribution d'images à au moins deux dispositifs d'affichage séparés (8, 10, 12), le procédé comprenant:

   le multiplexage d'images reçues d'au moins deux sources ($4_1$, $4_8$),
   la fourniture sur une seule connexion des images multiplexées à chacun desdits dispositifs d'affichage séparés (8, 10, 12);
   au niveau de chacun desdits dispositifs d'affichage séparés, le démultiplexage des images multiplexées reçues ; et
   au niveau de l'un desdits dispositifs d'affichage séparés, l'affichage des images démultiplexées à partir de deux ou plusieurs desdites sources.

11. Le procédé selon la revendication 10, dans lequel l'étape de multiplexage comprend le multiplexage temporel des images reçues.

12. Le procédé selon la revendication 11, dans lequel l'étape de multiplexage comprend en outre la réduction du nombre d'images par seconde pour au moins une desdites sources.

13. Le procédé selon la revendication 10, 11, ou 12, dans lequel l'étape de fourniture des images multiplexées comprend la fourniture de toutes les images multiplexées à chacun desdits dispositifs d'affichage séparés.

14. Le procédé selon l'une des revendications 10 à 13, dans lequel tous les dispositifs d'affichage sont connectés en série sur ladite connexion unique.

15. Le procédé selon l'une des revendications 10 à 14, dans lequel au moins un des dispositifs d'affichage séparés comprend un mur vidéo ayant au moins deux écrans ($28_1$, $28_{15}$) formant une surface d'affichage continue ou quasi-continue, et comprenant en outre:

la sélection d'une première partie des images démultiplexées pour affichage sur un premier parmi les écrans, et
la sélection d'une deuxième partie de ladite une image démultiplexée pour affichage sur un deuxième parmi les écrans, de telle sorte que ladite une image démultiplexée s'étend sur au moins deux écrans de la surface d'affichage.

**EP 1 501 300 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 02290587 A
- US 6229849 B
- JP 2000324489 A
- US 5691777 A